# EUROPÄISCHE PATENTANMELDUNG

(11) **EP 2 165 606 A1**
(43) Veröffentlichungstag der Anmeldung: **24.03.2010**
(21) Anmeldenummer: 09011754.0
(22) Anmeldetag: 15.09.2009
(51) Int. Cl.: A21D 2/16, A21D 2/26, A21D 2/36, A21D 13/04, A23L 1/03, A23L 1/29, A23L 1/30

(54) **Zusammensetzung für ein Lebensmittel**

(30) Priorität: 18.09.2008 DE 102008047673
(71) Anmelder: Lipid4Life GmbH, 65812 Bad Soden (DE)
(72) Erfinder:
(74) Vertreter: Müller-Gerbes Wagner Albiger Patentanwälte

(57) **Zusammenfassung**

Die Erfindung betrifft eine Zusammensetzung für ein Lebensmittel, umfassend einen Getreidemehlersatzstoff, ein Backtriebmittel, Wasser und ein Bindemittel, wobei die Zusammensetzung einen Gehalt an Ω3-Fettsäuren von mindestens 0,3 Gew.-% aufweist und ferner mittelkettige Triglyceride (MCT) mit 8 bis 12 Kohlenstoffatomen enthält.

## Beschreibung

Die Erfindung betrifft eine Zusammensetzung für ein Lebensmittel, die sich beispielsweise zur Herstellung von Backwaren, wie Brot eignet, umfassend einen Getreidemehlersatzstoff, ein Backtriebmittel, Wasser und ein Bindemittel, wobei die Zusammensetzung einen Gehalt an Ω3-Fettsäuren von mindestens 0,3 Gew.-% aufweist.

Backwaren, wie Brot basieren üblicherweise auf Zusammensetzungen, welche Getreidemehl enthalten. Derartige Backwaren sind beispielsweise für Diabetiker nur bedingt bis gar nicht geeignet, da sie zu einer Erhöhung des Blutzuckerspiegels führen. Ferner leidet ein stetig steigender Teil der Bevölkerung an Allergien gegenüber Getreidemehlerzeugnissen, so dass auch für diesen Anteil der Bevölkerung der Verzehr von getreidemehlhaltigen Backwaren zu vermeiden ist.

Gattungsgemäße Zusammensetzungen sind z.B. aus der CH 620 813 A5 bekannt, jedoch konnte bei derartigen bekannten Zusammensetzungen bislang nicht vollständig auf Getreidemehl verzichtet werden und die bekannten Zusammensetzungen lassen Raum für Verbesserungen hinsichtlich der ernährungsphysiologischen Vorteile.

Aufgabe der Erfindung ist es daher, eine Zusammensetzung für ein Lebensmittel, insbesondere für Backwaren vorzuschlagen, die durch vollständigen Verzicht auf Getreidemehl einen Verzehr derartiger Backwaren auch durch Diabetiker oder Menschen mit Getreidemehlallergie möglich macht und welche darüber hinaus ernährungsphysiologisch vorteilhafte Eigenschaften aufweist.

Zur Lösung dieser Aufgabe wird erfindungsgemäß eine Zusammensetzung für ein Lebensmittel gemäß den Merkmalen des Patentanspruches 1 vorgeschlagen.

Vorteilhafte Ausgestaltungen und Weiterbildungen der Erfindung sind Gegenstand der abhängigen Ansprüche.

Die Erfindung sieht eine Zusammensetzung für ein Lebensmittel vor, die als weiteren Bestandteil mittelkettige Trigyderide (MCT) mit 8 bis 12 Kohlenstoffatomen umfasst.

Gemäß der Erfindung umfasst somit die Zusammensetzung auch mittelkettige Triglyceride (MCT) mit 8 bis 12 Kohlenstoffatomen, welche ernährungsphysiologisch besonders vorteilhaft sind. Diese mittelkettigen Triglyceride liegen üblicherweise in Form von Öl vor, so dass sie der erfindungsgemäßen Zusammensetzung problemlos beigemischt werden können.

Die in der erfindungsgemäßen Zusammensetzung vorhandenen Ω3-Fettsäuren werden nach einem Vorschlag der Erfindung von All-cis-5, 8, 11, 14, 17-Eicosapentaensäure (EPA) und/oder All-cis-4, 7,10, 13, 16, 19-Docosahexaensäure (DHA) gebildet. Auch kann α-Linolensäure, wie sie z.B. in Leinöl vorhanden ist, die Ω3-Fettsäuren der erfindungsgemäßen Zusammensetzung bilden oder ergänzen.

Unter einem Getreidemehlersatzstoff wird im Sinne der Erfindung jegliches zu einer mehligen Fraktion zerkleinerte Material pflanzlichen Ursprungs verstanden, welches sich zur Substitution von Getreidemehl in einem Lebensmittel, vorzugsweise einer Backware eignet. Beispiele derartiger Getreidemehlersatzstoffe umfassen jedwede gemahlenen Nüsse einschließlich Erdnüsse, Samen und Schoten von Pflanzen, z.B. Leinsamen oder Johannesbrotfrüchte oder auch gemahlene Pflanzenwurzeln.

Bei den gemahlenen Nüssen handelt es sich vorzugsweise um Haselnüsse oder Macadamianüsse, welche ein günstiges Verhältnis von Ω3 : Ω6-Fettsäuren aufweisen und der Zusammensetzung einen angenehmen Geschmack verleihen.

Bevorzugt werden als Getreidemehlersatzstoffe zerkleinerte Leinsamen eingesetzt, die im Wesentlichen nur Ω3-Fettsäuren enthalten.

Das Verhältnis von Ω3 : Ω6-Fettsäuren in der erfindungsgemäßen Zusammensetzung beträgt mindestens 1 : 1, wobei bevorzugt der Gehalt an Ω3-Fettsäuren signifikant größer als der Gehalt an Ω6-Fettsäuren ist, beispielsweise ein Verhältnis von 5 : 1.

Die erfindungsgemäße Zusammensetzung enthält darüber hinaus einen sehr hohen Gehalt an ernährungsphysiologisch vorteilhaften Ω3-Fettsäuren, nämlich mindestens in einer Menge von 0,3 Gew.-% der gesamten Zusammensetzung. Diese Ω3-Fettsäuren können durch Einsatz von Leinsamen als Getreidemehlersatzstoff in die Zusammensetzung eingebracht werden und/oder durch Zusatz von entsprechenden Pulvern oder Ölen in die Zusammensetzung eingebracht sein. Die Obergrenze des Gehalts an Ω3-Fettsäuren ist in erster Linie geschmacklich bedingt und liegt bei etwa 40 Gew.-%.

Die im Rahmen der Erfindung verwendeten Leinsamen als Lieferanten hochwertiger Ω3-Fettsäuren können wahlweise in Form von Mehl und/oder Schrot vorliegen, wobei nach einem weiteren Vorschlag der Erfindung die Leinsamen jeweils in Anteilen von 50% in Form von Mehl und Schrot vorliegen.

Das vorgesehene Bindemittel der erfindungsgemäßen Zusammensetzung kann wahlweise Gluten und/oder Eiweiß und/oder Vollei sein und verleiht der erfindungsgemäßen Zusammensetzung die gewünschte Krume, d.h. die Zugabe ist bei Verwendung der erfindungsgemäßen Zusammensetzung für die Herstellung von Backwaren backtechnisch bedingt.

Als Backtriebmittel wird Bäckerhefe und/oder Backpulver verwendet.

Aus diesen vorgenannten Basisstoffen wird unter Zugabe von Wasser in ausreichender Menge eine Teigmischung hergestellt, die sich insbesondere zum Ausbacken und damit zur Herstellung von Backerzeugnissen, vorzugsweise Brot eignet.

Vorteilhaft umfasst die erfindungsgemäße Zusammensetzung zusätzliche Mengen an 03-Fettsäuren, die beispielsweise durch Zugabe von Leinöl eingebracht werden können.

Im Rahmen der Erfindung können zur Steigerung der positiven Wirkung auf den menschlichen Organismus auch weitere Mengen an Ω3-Fettsäuren zugegeben werden, beispielsweise in Form von mikrogekapselten Ω3-Fettsäuren. Hierbei handelt es sich vorzugsweise um All-cis-5, 8, 11, 14, 17-Eicosapen-taensäure (EPA) und/oder All-cis-4, 7, 10, 13, 16, 19-Docosahexaensäure (DHA).

Im Rahmen der Erfindung wird eine Zusammensetzung vorgeschlagen, deren Gehalt an Kohlenhydraten, die dem menschlichen Kohlenhydratstoffwechsel zuführbar sind, unter 10 Gew.-% liegt. Es sind auch kohlenhydratfreie Rezepturen im Rahmen der Erfindung vorgesehen.

Ein aus einer derartigen Zusammensetzung hergestelltes Lebensmittel, insbesondere eine Backware zeichnet sich durch vollständige Abwesenheit von Getreidemehl aus, ist gleichzeitig sehr gut verträglich und weist durch den hohen Anteil an Ω3-Fettsäuren besonders gute ernährungsphysiologische Eigenschaften auf.

### Beispiel:

Zur Herstellung einer brotartigen Backware wurden

| | |
|---|---|
| 150 g | gemahlene Haselnüsse, |
| 100 g | Gluten, |
| 100 g | zerkleinerte Leinsamen (50% Schrot und 50% Mehl) sowie |
| 50 g | Leinöl, |
| 10 g | eines Öls aus mittelkettigen Triglyceriden mit 8 bis 12 Kohlenstoff-atomen, |
| 40-50 g | Vollei |
| 15 g | Hefe |
| 8 g | Fischölpulver (überwiegend EPA und DHA) |
| 200 g | Wasser |

ohne Zusatz von Getreidemehl zu einem Teig angerührt und anschließend zu einer brotartigen Backware in einem Ofen ausgebacken.

Es zeigte sich eine brotartige Konsistenz mit streichfähiger Krume.

Die ernährungsphysiologische Analyse ergab pro 100 g der Backware folgende Werte:

| | |
|---|---|
| Trockenmasse (%): | 69,7^{DAR} |
| Wasser (%): | 30,3^{DAR} |
| Fett (%): | 33,6^{DAR} |
| Fett i.Tr. (%): | 48,2^{DAR} |
| davon gesättigte Fettsäuren (%): | 9,5 |
| einfach ungesättigte Fettsäuren (%): | 49,4 |
| mehrfach ungesättigte Fettsäuren (%): | 40,5 |
| Ω3 Fettsäuren (%): | 24,2 (bezogen auf Gesamtfett) |
| Ω6 Fettsäuren (%): | 16,3 (bezogen auf Gesamtfett) |
| Gesamteiweiß (%): | 23,6^{DAR} |
| N₂ (%): | 3,78^{DAR} |
| Asche (%): | 2,5 |
| Asche i.Tr. (%): | 3,6 |
| Ballaststoffe (%): | 23,2 |
| Gucose (%): | < 0,1 |
| Saccharose (%): | < 0,1 |
| Natrium (mg/100g): | 129,7 |
| Kohlenhydrate (%): | 0 |
| Brennwert (in 100g): | 1644 KJ / 397 kcal |

Die Zusammensetzung eignet sich damit zur Herstellung von getreidemehlfreien Backwaren und kann z.B. als Fertigmischung für das Herstellen von Backwaren abgepackt vertrieben werden.

Es versteht sich, dass bei Zugabe von Vollei bevorzugt solches von mit Ω3-Fettsäuren gefütterten Hühnern, d.h. sogenannte 03-Eier, verwendet werden.

## Patentansprüche

1. Zusammensetzung für ein Lebensmittel, umfassend einen Getreidemehlersatzstoff, ein Backtriebmittel, Wasser und ein Bindemittel, wobei die Zusammensetzung einen Gehalt an Ω3-Fettsäuren von mindestens 0,3 Gew.-% aufweist, **dadurch gekennzeichnet, dass** sie ferner mittelkettige Triglyceride(MCT) mit 8 bis 12 Kohlenstoffatomen enthält.

2. Zusammensetzung nach Anspruch 1, **dadurch gekennzeichnet, dass** die Ω3-Fettsäuren All-cis-5, 8, 11, 14, 17-Eicosapentaensäure (EPA) und/oder All-cis-4, 7, 10, 13, 16, 19-Docosahexaensäure (DHA) umfassen.

3. Zusammensetzung nach Anspruch 1 oder 2, **dadurch gekennzeichnet, dass** der Getreidemehlersatzstoff ausgewählt ist aus der Gruppe umfassend zerkleinerte Nüsse, Pflanzensamen und Pflanzenschoten ausgenommen solche von Getreidepflanzen, gemahlene Pflanzenwurzeln.

4. Zusammensetzung nach einem der Ansprüche 1 bis 3, **dadurch gekennzeichnet, dass** der Getreidemehlersatzstoff aus gemahlenen Haselnüssen und/oder Macadamianüssen gebildet ist.

5. Zusammensetzung nach einem der Ansprüche 1 bis 3, **dadurch gekennzeichnet, dass** der Getreidemehlersatzstoff aus zerkleinerten Leinsamen gebildet ist.

6. Zusammensetzung nach Anspruch 5, **dadurch gekennzeichnet, dass** die Leinsamen in Form von Mehl und/oder Schrot vorliegen.

7. Zusammensetzung nach Anspruch 5 oder 6, **dadurch gekennzeichnet, dass** Leinsamen zu 50% in Form von Mehl und zu 50% in Form von Schrot als Getreidemehlersatzstoff verwendet sind.

8. Zusammensetzung nach einem der Ansprüche 1 bis 7, **dadurch gekennzeichnet, dass** das Bindemittel Gluten und/oder Eiweiß und/oder Vollei ist.

9. Zusammensetzung nach einem der Ansprüche 1 bis 8, **dadurch gekennzeichnet, dass** sie Leinöl umfasst.

10. Zusammensetzung nach einem der Ansprüche 1 bis 9, **dadurch gekennzeichnet, dass** das Backtriebmittel Bäckerhefe oder Backpulver ist.

11. Zusammensetzung nach einem der Ansprüche 1 bis 10, **dadurch gekennzeichnet, dass** die Ω3-Fettsäuren mikrogekapselt sind.

12. Zusammensetzung nach einem der Ansprüche 1 bis 11, **dadurch gekennzeichnet, dass** der Gehalt an Ω3-Fettsäuren größer oder gleich dem Gehalt an Ω6-Fettsäuren ist.

13. Zusammensetzung nach einem der Ansprüche 1 bis 12, **dadurch gekennzeichnet, dass** der Gehalt an dem menschlichen Kohlenhydratstoffwechsel zuführbaren Kohlenhydraten kleiner als 10 Gew.-% ist.

14. Backware, enthaltend eine Zusammensetzung nach einem der Ansprüche 1 bis 13 bei Abwesenheit von Getreidemehl.
